# DEMANDE DE BREVET EUROPEEN

(11) **EP 3 892 691 A1**
(43) Date de publication de la demande: **13.10.2021**
(21) Numéro de dépôt: 21164391.1
(22) Date de dépôt: 23.03.2021
(51) Int. Cl.: C09D 5/02, C09D 7/61, C09D 7/40, C09D 183/04, C09D 123/08, C08K 3/34, C08K 7/26

(54) **SUSPENSION HOMOGÈNE POUR PEINTURES ZÉOLITHIQUES**

(30) Priorité: 23.03.2020 FR 2002825
(71) Demandeur: Centre National d'Etudes Spatiales, 75039 Paris Cedex 01 (FR); Centre national de la recherche scientifique, 75016 Paris (FR); Université de Haute Alsace, 68093 Mulhouse Cedex (FR); Alsace, Zéphir, 68350 Brunstatt-Didenheim (FR)
(72) Inventeur: RIOLAND, Guillaume, 31400 Toulouse (FR); FAYE, Delphine, 31320 PECHADOU (FR); DAOU, Jean, 68100 Mulhouse (FR); PATARIN, Joël, 68720 Flaxlanden (FR); DIBOUNE, Mathieu, 68300 Saint-Louis (FR); NOUALI, Habiba, 68260 Kingersheim (FR); SOULARD, Michel, 68200 Mulhouse (FR)
(74) Mandataire: Germain Maureau

(57) **Abrégé**

Suspension homogène destinée à la fabrication de peintures zéolithiques comprenant:
• de 50 à 70 % en poids d'une masse sèche par rapport au poids de la suspension homogène, la masse sèche étant constituée :
- de 15 à 35 % en poids d'une composition par rapport au poids total de la masse sèche, la composition comprenant :
- de 30 à 100 % en poids d'un liant organique par rapport au poids de la composition et
- de 0 à 70 % en poids d'un liant inorganique par rapport au poids de la composition, et

- de 65 à 85 % en poids d'une zéolithe par rapport au poids total de la masse sèche,

• de 30 à 50 % en poids d'un solvant par rapport au poids de la suspension homogène.

## Description

La présente invention se rapporte au domaine des peintures destinées à la décontamination moléculaire, notamment en orbite spatiale ou dans le domaine du grand public. Selon un premier aspect, la présente invention concerne une suspension homogène et selon un second aspect, la présente invention concerne une peinture zéolithique constituée de ladite suspension homogène ou le film de ladite peinture déposé sur une surface.

La contamination moléculaire est un problème important pouvant considérablement affecter la performance des instruments embarqués dans le domaine spatial. Selon l'environnement thermique, certaines molécules polluantes provenant du dégazage sous vide des matériaux constitutifs de satellite viennent en effet se déposer sur les surfaces sensibles telles que les optiques, les détecteurs ou les surfaces de contrôle thermique. Grâce à leur structure microporeuse organisée qui leur confère de remarquables capacités d'adsorption, les zéolithes s'avèrent être des solides de choix pour minimiser les risques de pollution. Cependant, les synthèses classiques de ces zéolithes aboutissent généralement à des poudres. Or ces poudres ne peuvent pas être utilisées telles quelles puisqu'elles seraient elles-mêmes sources de pollution. Il convient donc de les mettre en forme. Il existe des techniques permettant le dépôt d'un film zéolithique sur une surface ou bien permettant la compression de la poudre sous la forme de pastille zéolithique mais la mise en œuvre de ces films ou pastilles est complexe et les applications sont limitées.

L'un des buts de la présente invention vise à pallier les inconvénients ci-dessus. A cet effet, la présente invention propose une suspension homogène destinée à la fabrication de peintures zéolithiques, comprenant :
- de 50 à 70 % en poids d'une masse sèche par rapport au poids de la suspension homogène, la masse sèche étant constituée :
   - de 15 à 35 % en poids d'une composition par rapport au poids total de la masse sèche, la composition comprenant :
      - de 30 à 100 % en poids d'un liant organique par rapport au poids de la composition et
      - de 0 à 70 % en poids d'un liant inorganique par rapport au poids de la composition, et
   - de 65 à 85 % en poids d'une zéolithe par rapport au poids total de la masse sèche,
- de 30 à 50 % en poids d'un solvant par rapport au poids de la suspension homogène.

Ainsi, la zéolithe préparée en suspension en vue d'obtenir une peinture permet une formulation adaptée à de nombreuses applications. Les peintures peuvent en effet être pulvérisées sur un large choix de surfaces. Des tests d'application des peintures zéolithiques sur des supports en alliage d'aluminium ont montré de bonnes propriétés d'adhésion, ce qui permet d'incorporer facilement des zéolithes aux structures utilisées dans les satellites. De plus, la présence de zéolithes en suspension permet d'atteindre des concentrations bien supérieures aux autres méthodes. Des résultats d'expérimentations ont également montré que la totalité de la porosité des zéolithes restait accessible, pour certaines formulations, après séchage de la peinture malgré la présence de liants qui réduisent sans annuler les capacités d'adsorption (se reporter aux tests réalisés avec la molécule de n-hexane dans le Tableau 1 : la cinétique d'adsorption du diazote dans les pores de la zéolithe est ralentie mais elle reste possible).

Il est entendu dans le présent document que par le terme « zéolithe » on entend une structure cristalline poreuse formée d'aluminosilicate et dans lequel des espaces vides sont occupés par des cations tels que des cations de sodium Na⁺, lithium Li⁺, calcium Ca²⁺, etc... notamment dans les cas des zéolithes aluminosiliciques (FAU et LTA). Dans la présente demande, les zéolithes purement siliciques (par exemple MFI et *BEA) sont également pris en compte dans la définition du terme « zéolithe ».

La combinaison d'un liant inorganique avec un liant organique dans la suspension permet d'augmenter la cohésion de la peinture zéolithique, ce qui évite le décollement et le craquèlement au cours du temps et ce malgré les conditions d'utilisations dans des satellites en orbite soumis à de nombreuses vibrations et à des chocs éventuels. De plus, l'ajout d'un liant inorganique permet de réduire la proportion de liant organique dans la composition de la peinture et donc de diminuer l'éventuel dégazage sous vide de la partie organique. Les liants inorganiques possèdent la particularité de ne pas dégazer en orbite.

Avantageusement, la masse sèche de la formulation homogène comprend en outre de 3 à 8 % en poids d'un catalyseur par rapport au poids total de la masse sèche. Le catalyseur est choisi parmi des catalyseurs de titane, tel que le tétrabutanolate de titane de formule brute C₁₆H₃₆O₄Ti, le tétrachlorure de titane TiCl₄ ou le dioxyde de titane TiO₂. Le catalyseur permet en effet de réduire la température de polymérisation du liant afin de pouvoir obtenir le séchage de la suspension à une température inférieure à 100 °C, voire à température ambiante selon la nature des liants. L'utilisation d'étuves ou d'autres dispositifs coûteux et encombrants est évitée. L'apport énergétique pour permettre l'obtention du film de peinture est également moindre.

Selon une possibilité, le liant organique est choisi parmi des résines silicones, telles que des polydiméthylsiloxanes, par exemple les résines vendues sous les marques déposées SILRES® MP 50 E, SILRES® MSE 100, SILRES® HK 46, (disponibles auprès de la société IMCD), Silikophen® AC 900 et Silikophen® AC 1000 (disponibles auprès de la société Evonik), d'autres résines silicones, telles que les produits commercialisés sous la marque déposée DOWSIL®, disponibles auprès de la société Univar ou des monomères organiques dispersés en phase aqueuse, tels que des monomères d'acétate de vinyle et d'éthylène dispersés en phase aqueuse, tel que le produit vendu sous la marque déposée VINNAPAS® EP 8010 par la société IMCD ou une combinaison de ces liants organiques.

Selon une disposition, la composition comprend 100 % en poids d'un liant organique par rapport au poids de la composition.

De préférence, la composition comprend de 30 à 70 % en poids de liant inorganique par rapport au poids de la composition, le liant inorganique étant une suspension de silice colloïdale en phase aqueuse. Une telle suspension est par exemple disponible dans le commerce sous la marque déposée LUDOX®, tel que le LUDOX® HS-40 fourni par la société Sigma-Aldrich. Le terme « HS » signifie que de l'hydroxyde de sodium est utilisé pour stabiliser la suspension de silice colloïdale et le chiffre « 40 » signifie que la concentration massique de silice contenue dans la suspension est de 40 %, les 60 % restants étant de l'eau. La suspension de silice colloïdale en phase aqueuse peut également être du LUDOX® AS-30, LUDOX® AS-40, LUDOX® TMA, les lettres suivant la marque LUDOX® indique la nature du contre-ion de stabilisation utilisé comme par exemple 'AS' pour de l'hydroxyde d'ammonium, 'TMA' pour du TriMéthylAmmonium, et les chiffres indiquent la concentration massique de silice en suspension.

Avantageusement, les résines silicones sont choisies parmi les polydiméthylsiloxanes, les résines SILRES® MP 50 E, SILRES® MSE 100, SILRES® HK 46, Silikophen® AC 900, Silikophen® AC 1000, DOWSIL® RSN-0805, DOWSIL® RSN-0806, DOWSIL® 2405 et une combinaison de ces résines. Ces résines silicones sont en effet choisies pour leur capacité à adhérer à des surfaces, notamment constituées d'aluminium ou des surfaces en matériaux de constructions tel que du béton, le plâtre. Ces résines confèrent des propriétés mécaniques d'adhérence aux films de peinture déposés et séchés, leur permettant d'atteindre une note comprise de 0 à 2 au test d'adhésion décrit ci-après. Ces résines silicones sont également choisies pour leur affinité avec les zéolithes considérées : ces résines ont un rôle de liant vis à vis des zéolithes, tout en restant majoritairement sans effet vis-à-vis de l'accessibilité à la porosité de la zéolithe considérée selon la méthode de mesure indiquée ci-dessous. La capacité d'adsorption des COVs par ces zéolithes sont conservées malgré la présence des résines de silicone. La taille de la résine considérée permet en effet de ne pas bloquer les pores de la zéolithe. La résine n'entre pas en compétition avec l'absorption COVs. Les résines silicones sont également choisies pour être stables à des températures inférieures à 280°C, au contraire d'autres résines qui se décomposent à ces températures en provoquant un dégagement de gaz risquant d'être intercepté par les pores, ce qui conduit à l'effet opposé à celui recherché.

Ces résines silicones sont également résistantes au cyclage thermique, ce qui est notamment bénéfique pour des applications dans les satellites.

Selon une disposition, le solvant est choisi parmi le xylène ou l'eau. La suspension homogène aqueuse présente l'avantage d'une non toxicité pour des applications dans la peinture grand public en vue d'adsorber des polluants organiques notamment dans les établissements recevant du public. Pour cette application, c'est surtout le séchage à température ambiante qui permet l'utilisation grand public.

Avantageusement, le solvant est constitué de xylène, d'eau ou d'un mélange de ces deux solvants. Ces solvants sont en effet préconisés par les fournisseurs de résines silicones précitées utilisées dans la suspension homogène.

Avantageusement, la suspension homogène est dépourvue d'ester dibasique, notamment le DBE. Les esters dibasiques sont conseillés comme solvant de certaines résines silicones notamment des résines proposées par Dow Corning, ce qui diffère de la présente invention.

Selon une possibilité, la zéolithe est choisie parmi la zéolithe de type structural LTA (fournie par Sigma-Aldrich), la zéolithe de type structural FAU (fournie par Sigma-Aldrich), la zéolithe de type structural MFI (fournie par Zéphir Alsace), et la zéolithe de type structural *BEA (fournie par Zéphir Alsace), ou une combinaison de ces zéolithes.
Notamment, la zéolithe est une zéolithe silicalite-1 de type strutural MFI (fournie par Zéphir Alsace).
De préférence, la zéolithe choisie est la zéolithe 13X de type structural FAU car elle présente les meilleures capacités d'adsorption vis-à-vis des COVs (acronyme de Composés Organiques Volatils) et une taille de pores supérieure à celle des autres zéolithes.
De préférence, la masse sèche comprend de 70 à 80 % en poids de zéolithe par rapport au poids total de la masse sèche. Les meilleures propriétés d'adhésion, de cohésion et d'adsorption de la peinture zéolithique ont été obtenues avec cette proportion massique.

Avantageusement, la suspension homogène est dépourvue de tout dérivé de cellulose. Ces composés sont en effet peu stables à la température. Ils sont susceptibles de se décomposer en formant un dégagement gazeux risquant de diminuer l'accessibilité au pores de la zéolithe.

Selon une disposition, la composition de la suspension homogène telle que précédemment décrite comprend en outre entre 1 et 20% en poids d'un pigment noir. Ces pigments sont choisis de sorte à conférer à la suspension homogène et au film de peinture qui en résulte, des propriétés d'absorption de la lumière. Cette variante est notamment très utile pour protéger des équipements optiques embarqués à bord de satellite.

En particulier, le pigment noir est choisi parmi du charbon animal, du noir du carbone ou un mélange de ces deux composés. Le charbon animal, également connu selon l'expression charbon d'os ou noir animal, est un pigment obtenu par calcination d'os. Il est facile de s'en approvisionner. Sa composition comprend du carbone et de l'hydroxyapatite.

De préférence, le pigment noir est du noir du carbone. Sa composition de de 100% de carbone lui confère un pouvoir de pigmentation plus important. Il est disponible auprès de la société Alfa Aesar ou auprès de Orion Engineered Carbons sous la dénomination Printex® WE2-B.

Selon un deuxième aspect, l'invention propose une peinture zéolithique destinée à former un film de peinture sur une surface, la peinture zéolithique étant constituée de la suspension homogène telle que précédemment décrite

Après application de la peinture zéolithique sur une surface et son séchage, il est typiquement obtenu un film de peinture présentant une épaisseur comprise entre 10 et 120 micromètres et capabable d'absorber les COVs.
D'autres caractéristiques et avantages se dégageront de la description des exemples de suspension qui suivent en référence au Tableau 1 indiquant les propriétés des suspensions homogènes comprenant de la zéolithe 13X de type structural FAU ainsi que la zéolithe silicalite-1 de type structural MFI selon selon des exemples de réalisation de l'invention.

### I- Protocole de formulation

Les suspensions homogènes zéolithiques décrites ci-après ont été élaborées selon les conditions générales suivantes :
1. Saturer en eau la zéolithe (notamment la zéolithe 13X de type structural FAU) en la plaçant dans un dessiccateur dont le taux d'humidité est contrôlé (solution saturée de chlorure d'ammonium (NH₄Cl 80 % HR),
2. Dans un bêcher, peser la quantité de zéolithe nécessaire à la formulation de la peinture zéolithique,
3. Rajouter à la zéolithe la quantité de solvant nécessaire à la formulation de la peinture zéolithique,
4. Disperser la zéolithe dans le solvant à l'aide d'un bain à ultrasons pendant 10 minutes,
5. Ajouter à la suspension les quantités de liant(s) et éventuellement de catalyseur nécessaire à la formulation de la peinture zéolithique,
6. Agiter vigoureusement la suspension jusqu'à ce qu'elle soit bien homogène,
7. Une fois la peinture zéolithique prête, celle-ci est appliquée par pulvérisation sur une plaque en alliage d'aluminium Al 6061 préalablement traitée par abrasion physique . La pulvérisation est effectuée à l'aide de l'aérographe AFC-101A fourni par Conrad Electronic, à une distance constante avec le support pour chaque application.

L'aluminium étant le matériau le plus utilisé dans la conception des satellites, l'alliage d'aluminium Al 6061 a été choisi pour réaliser cette étude. Il a été fourni par la société Alfa Aesar. Afin d'améliorer les propriétés d'adhésion de la peinture sur le support, les plaques d'aluminium (20 x 15 x 2,3 mm³) sont systématiquement traitées par abrasion physique à l'aide d'un papier de verre doté d'une taille de grains de 180 µm qui permet de créer de la rugosité de surface. L'abrasion est effectuée manuellement et de manière circulaire pendant environ 1 minute jusqu'à ce que l'ensemble de la surface de la plaque soit traitée. Ensuite, celle-ci est nettoyée à l'éthanol et à l'acétone afin d'éliminer les impuretés de surface.
Les suspensions homogènes de l'invention ont été appliquées directement sur les supports préalablement traités par abrasion physique. Aucune couche de primaire d'accrochage n'a été nécessaire.
Les températures pouvant varier de -120 °C à +150 °C en orbite, la stabilité thermique des constituants utilisés dans l'élaboration des peintures zéolithiques a été étudiée. Les comportements des liants ont notamment été caractérisés par DSC (Differential Scanning Calorimetry) et ATG (Analyse ThermoGravimétrique). Ces analyses DSC et ATG ont été réalisées, respectivement, sur les appareils DSC 1 et TGA/DSC 1 de chez Mettler-Toledo.

Les analyses ont été effectuées après la polymérisation des liants et les résultats indiquent que tous les liants identifiés dans le Tableau 1 sont stables à une température de 150 °C.
De plus, des tests de cyclage thermique ont été réalisés afin d'étudier la stabilité thermique des peintures élaborées pour toutes les formulations précisées ci-dessous. Les résultats de ces tests ont été obtenus sur les peintures zéolithiques appliquées sur des supports en aluminium en faisant varier la température entre -52°C et 62 °C. Au total, 100 cycles ont été réalisés à pression atmosphérique avec une vitesse de chauffe et de refroidissement de 10 °C/min, un cycle correspondant à :
- Une montée en température de -52 à 62 °C,
- Une stabilisation à 62 °C pendant 15 minutes,
- Une descente en température de 62 à -52 °C, et
- Une stabilisation à -52 °C pendant 15 minutes.
En fin de test, les peintures examinées ne montrent aucun signe d'effritement ou de craquelures. L'aspect de celles-ci est resté identique à celui avant le cycle thermique. Les tests d'adhésion effectués après le cyclage thermique ne montrent aucun signe de détérioration, les propriétés d'adhésion sont inchangées. Ainsi, les peintures zéolithiques élaborées sont stables dans la gamme des températures étudiées.

### II- Propriétés testées

Pour identifier les performances des différentes suspensions de la présente invention, les paramètres suivants ont été évalués.

**Adhésion** : Un test d'adhésion (aussi appelé test de quadrillage) est réalisé selon la norme ISO 2409 après l'étape de séchage du film de peinture. Ce test attribue une note d'adhésion comprise entre 0 et 5, 0 étant la meilleure note et 5 la plus mauvaise. Les résultats sont indiqués dans le Tableau 1 ci-dessous.

**Cohésion** : Il n'existe pas de test normé pour la cohésion, celle-ci est évaluée visuellement et au toucher. Cette évaluation vise à déterminer simplement si la peinture séchée s'effrite, dans quelle proportion ou si elle ne s'effrite pas. Les résultats sont indiqués dans le Tableau 1.

**Accessibilité de la porosité** : Ce paramètre est essentiel compte tenu de l'application visée afin de contrôler l'influence des liants dans la suspension et notamment de vérifier que les molécules de diazote sont bien adsorbées et piégées à l'intérieur de la porosité de la zéolithe.
L'accessibilité de la porosité est déterminée par manométrie d'adsorption-désorption du diazote à 77 K (ASAP 2420 de Micromeritics). Un temps d'équilibre de 30 secondes a été fixé pour chaque expérience. Ces expériences ont été systématiquement réalisées sur les peintures zéolithiques élaborées sous forme de poudre, c'est-à-dire après l'étape de séchage de la peinture liquide non supportée ne contenant que le liant et la zéolithe. Ces dernières sont dégazées, au préalable, à 150 °C pendant 15 h sous vide afin de libérer la porosité de la zéolithe exposée à l'atmosphère environnant de tous polluants gazeux (eau, COVs). En fonction de la quantité adsorbée de diazote et de la proportion de zéolithe contenue dans la formulation, il est possible de déterminer le taux d'accessibilité de la porosité de la zéolithe des peintures zéolithiques élaborées en comparant ce taux celui de la zéolithe pure de même type structural, servant de référence et qui présente une accessibilité de la porosité de 100 %. Les résultats des peintures à base de la zéolithe 13X ou de la zéolithe silicalite-1 sont par exemple indiqués dans le Tableau 1.

**Capacités d'adsorption de COVs :** Pour évaluer les capacités d'adsorption d'un matériau zéolithique, la molécule sonde de n-hexane est communément utilisée. Les peintures zéolithiques élaborées ainsi que les zéolithes pures en poudre servant de références ont été mises en contact avec cette molécule de n-hexane à l'état gazeux préalablement asséchés de ses molécules d'eau. Après avoir dégazé les mélanges à étudier (postes de dégazage de l'ASAP 2420 de chez Micromeritics à 150 °C sous vide pendant 15 heures) ceux-ci sont placés sous atmosphère de *n*-hexane sec. Les cinétiques d'adsorption du *n*-hexane sont relativement rapides avec un palier de saturation qui est atteint au bout d'environ 7 heures, quelle que soit la formulation utilisée. Les capacités maximales d'adsorption de *n*-hexane par les zéolithes 13X de type structural FAU, et silicalite-1 de type structural MFI qui sont les matériaux utilisés comme références, sont de 180 mg/g _{zéolithe anhydre} et de 110 mg/g _{zéolithe anhydre}, respectivement.

**L'épaisseur du film de peinture zéolithique** : L'épaisseur déposée est également un critère essentiel de la caractérisation de la qualité du revêtement obtenu. En effet, la variation de l'épaisseur d'une couche de peinture induit une variation de la quantité de zéolithe mise en jeu et donc une variation de la capacité de piégeage de polluants organiques. Ainsi, plus l'épaisseur du film de peinture est importante, plus la quantité de zéolithe sera élevée. L'épaisseur du film est mesurée à l'aide de l'appareil de mesure ISOSCOPE® FMP10 muni de la sonde FTA3.3H de chez Fischer.
Les résultats indiquent que l'épaisseur des couches formées influcence fortement les propriétés d'adhésion et de cohésion de la peinture. Plus l'épaisseur du film est épaisse et plus les propriétés d'adhésion et de cohésion diminuent. Un craquèlement est généralement observé sur des couches épaisses (> 50 µm) lorsque le test d'adhésion est effectué, phénomène qui n'est pas observé sur des couches moins épaisses (< 50 µm). De plus, les forces de cohésion sont moins intéressantes lorsque la couche de peinture est trop épaisse.

### III- Résultats

### Formulation 1

L'élaboration de cette suspension comprend une masse sèche constituée de 80 % en poids de la zéolithe 13X de type structural FAU et de 20 % en poids d'un liant organique à base d'une résine silicone disponible auprès de la société Univar sous la dénomination DOWSIL® RSN-0805. Le solvant est du xylène qui est utilisé à hauteur de 50 % en poids de la suspension finale non séchée (c'est-à-dire avant application sous forme de peinture séchée).
Comme indiqué dans le Tableau 1, l'adhésion déterminée selon la norme ISO 2409 est très bonne (note de 0). L'appréciation visuelle et au toucher de la cohésion indique une absence tolale d'effritement dans le film de peinture obtenu. L'accessibilité à la porosité et l'adsorption sont satisfaisantes avec une quantité adsorbée de *n*-hexane de 131 mg/g_{zéolithe anhydre}. Les conditions de séchage nécessitent un traitement thermique à 250 °C pendant 30 min.

### Formulation 2

L'élaboration de cette suspension comprend une masse sèche constituée de 80 % en poids de la zéolithe 13X de type structural FAU et de 20 % en poids d'un liant organique à base d'une résine silicone disponible auprès de la société Univar sous la dénomination DOWSIL® RSN-0806. Le solvant est du xylène, il est utilisé à hauteur de 50 % en poids de la suspension finale non séchée.
Le film obtenu montre une très bonne adhésion (note de 0). L'appréciation visuelle et au toucher de la cohésion indique une absence tolale d'effritement dans le film de peinture obtenu. L'accessibilité à la porosité et l'adsorption sont meilleures que les résultats obtenus pour la formulation N°1 avec une adsorption de 143 mg/g_{zéolithe anhydre} de *n*-hexane adsorbé contre 131 avec la formulation N°1. Le séchage est obtenu en 30 min à 250 °C.

### Formulation 3

L'élaboration de cette suspension comprend une masse sèche constituée de 80 % en poids de la zéolithe 13X de type structural FAU et de 20 % en poids d'un liant organique à base d'une résine silicone disponible auprès de la société IMCD sous la dénomination SILRES® HK 46. Le solvant est du xylène qui est utilisé à hauteur de 50 % en poids de la suspension finale non séchée.
Le film obtenu montre une très bonne adhésion (note de 0). L'appréciation visuelle et au toucher de la cohésion indique une absence totale d'effritement dans le film de peinture obtenu. L'accessibilité à la porosité est excellente et l'adsorption est meilleure que pour les formulations 1 et 2 avec une adsorption de n-hexane de 150 mg/g_{zéolithe anhydre}. Le séchage est obtenu en 30 min à 250 °C.

### Formulation 4

L'élaboration de cette suspension comprend une masse sèche constituée de 67 % en poids de la zéolithe 13X de type structural FAU, de 26 % en poids d'un liant organique à base d'une résine silicone disponible auprès de la société Univar sous la dénomination DOWSIL® 2405 et de 7 % en poids d'un catalyseur de titane (tétrabutanolate de titane) permettant une polymérisation à température ambiante. Le solvant est du xylène qui est utilisé à hauteur de 50 % en poids de la suspension finale non séchée.
Le film obtenu montre une très bonne adhésion (note de 1). L'appréciation visuelle et au toucher de la cohésion indique une absence totale d'effritement dans le film de peinture obtenu. L'accessibilité à la porosité est excellente et l'adsorption est meilleure que pour les formulations 1 à 3 avec une adsorption de *n*-hexane de 158 mg/g_{zéolithe anhydre}. Le séchage est avantageusement obtenu en 1 h à température ambiante.

### Formulation 5

L'élaboration de cette suspension comprend une masse sèche constituée de 76 % en poids de la zéolithe 13X de type structural FAU et de 24 % en poids d'un liant organique, à base de monomères d'acétate de vinyle et d'éthylène disponible auprès de la société IMCD sous la dénomination VINNAPAS® EP 8010. Le solvant est de l'eau qui est utilisée à hauteur de 50 % en poids de la suspension finale non séchée.

Le film obtenu montre une très bonne adhésion (note de 0). L'appréciation visuelle et au toucher de la cohésion indique un léger effritement dans le film de peinture obtenu. L'accessibilité à la porosité est excellente et l'adsorption du *n*-hexane est de 146 mg/g_{zéolithe anhydre}. Le séchage est avantageusement obtenu en 1 h à température ambiante.

### Formulation 6

L'élaboration de cette suspension comprend une masse sèche constituée de 80 % en poids de la zéolithe 13X de type structural FAU et de 20 % en poids d'une composition constitué de 50 % en poids d'un liant organique à base de monomères organiques (monomères d'acétate de vinyle et d'éthylène) disponibles sous la dénomination VINNAPAS® EP 8010 et de 50 % en poids d'un liant inorganique à base de silice colloïdale dispersée en phase aqueuse disponible aupès de la société Sigma-Aldrich sous la dénomination Ludox® HS-40. Le solvant est de l'eau qui est utilisée à hauteur de 50 % en poids de la suspension finale non séchée.
Le film obtenu montre une adhésion satisfaisante (note de 2). L'appréciation visuelle et au toucher de la cohésion indique un effritement du film de peinture obtenu. L'accessibilité à la porosité est excellente et l'adsorption du *n*-hexane est de 158 mg/g_{zéolithe anhydre}. Le séchage est avantageusement obtenu en 1 h à température ambiante.

### Formulation 7

L'élaboration de cette suspension comprend une masse sèche constituée de 80 % en poids de la zéolithe 13X de type structural FAU et de 20 % en poids à base d'une résine silicone disponible auprès de la société IMCD sous la dénomination SILRES® MP 50 E. Le solvant est de l'eau qui est utilisée à hauteur de 50 % en poids de la suspension finale non séchée.
Le film obtenu montre une très bonne adhésion (note de 0). L'appréciation visuelle et au toucher de la cohésion indique une absence tolale d'effritement dans le film de peinture. L'accessibilité à la porosité est excellente et l'adsorption du *n*-hexane est de 126 mg/g_{zéolithe anhydre}. Le séchage est obtenu en 30 min à 250 °C.

### Formulation 8

L'élaboration de cette suspension comprend une masse sèche constituée de 80 % en poids de la zéolithe 13X de type structural FAU et de 20 % en poids d'une composition constitué de 55 % en poids d'un liant organique à base d'une résine silicone disponible auprès de la société IMCD sous la dénomination SILRES® MP 50 E et de 45 % en poids d'un liant inorganique à base de silice colloïdale en phase aqueuse disponible aupès de la société Sigma-Aldrich sous la dénomination Ludox® HS-40. Le solvant est de l'eau qui est utilisée à hauteur de 50 % en poids de la suspension finale non séchée.
Le film obtenu montre une très bonne adhésion (note de 0). L'appréciation visuelle et au toucher de la cohésion indique une absence tolale d'effritement dans le film de peinture. L'accessibilité à la porosité est excellente et l'adsorption du *n*-hexane est de 136 mg/g_{zéolithe anhydre}. Le séchage est obtenu en 30 min à 250 °C.
Des formulations comprenant une teneur plus importante de liant inorganique de Ludox® HS-40 ont été testées, respectivement 55 %, 65 % et 70 % en poids. Les résultats concernant les propriétés d'adhésion, de cohésion et les condtions de séchage restent inchangées. Seule la note d'adhésion passe de 0 à 2 pour une formulation contenant 55 % en poids ou plus de Ludox® HS-40. La couche de peinture déposée est épaisse ce qui explique le changement des propriétés d'adhésion. Elle est supérieure à 100 micromètres pour des teneurs massiques égale ou supérieure à 55 % en poids.

### Formulation 9

L'élaboration de cette suspension comprend une masse sèche constituée de 83 % en poids de la zéolithe silicalite-1 de type structural MFI et de 17 % en poids d'un liant organique à base d'une résine silicone disponible auprès de la société Univar sous la dénomination DOWSIL® RSN-0805. Le solvant est du xylène qui est utilisé à hauteur de 65 % en poids de la suspension finale non séchée.
Le film obtenu montre une très bonne adhésion (note de 1). L'appréciation visuelle et au toucher de la cohésion indique une absence tolale d'effritement dans le film de peinture obtenu. L'accessibilité à la porosité est satisfaisante et l'adsorption du *n-*hexane est de 102 mg/g_{zéolithe anhydre}. Les conditions de séchage nécessitent un traitement thermique à 250 °C pendant 30 min.

### Formulation 10

L'élaboration de cette suspension comprend une masse sèche constituée de 83 % en poids de la zéolithe silicalite-1 de type structural MFI et de 17 % en poids d'un liant organique à base d'une résine silicone disponible auprès de la société Univar sous la dénomination DOWSIL® RSN-0806. Le solvant est du xylène qui est utilisé à hauteur de 65 % en poids de la suspension finale non séchée.
Le film obtenu montre une très bonne adhésion (note de 1). L'appréciation visuelle et au toucher de la cohésion indique une absence tolale d'effritement dans le film de peinture obtenu. L'accessibilité à la porosité est excellente et l'adsorption du *n*-hexane est de 98 mg/g_{zéolithe anhydre}. Les conditions de séchage nécessitent un traitement thermique à 250 °C pendant 30 min.

### Formulation 11

L'élaboration de cette suspension comprend une masse sèche constituée de 83 % en poids de la zéolithe silicalite-1 de type structural MFI et de 17 % en poids d'un liant organique à base d'une résine silicone disponible auprès de la société Univar sous la dénomination SILRES® HK 46. Le solvant est du xylène qui est utilisé à hauteur de 65 % en poids de la suspension finale non séchée.
Le film obtenu montre une très bonne adhésion (note de 0). L'appréciation visuelle et au toucher de la cohésion indique une absence tolale d'effritement dans le film de peinture obtenu. L'accessibilité à la porosité est excellente et l'adsorption du n-hexane est de 101 mg/g_{zéolithe anhydre}. Les conditions de séchage nécessitent un traitement thermique à 250 °C pendant 30 min.

### Formulation 12

L'élaboration de cette suspension comprend une masse sèche constituée de 75 % en poids de la zéolithe silicalite-1 de type structural MFI , de 15 % en poids d'un liant organique à base d'une résine silicone disponible auprès de la société Univar sous la dénomination DOWSIL® 2405 et de 10 % en poids d'un catalyseur de titane (le tétrabutanolate de titane) permettant une polymérisation à une température ambiante. Le solvant est du xylène qui est utilisé à hauteur de 65 % en poids de la suspension finale non séchée.
Le film obtenu montre une très bonne adhésion (note de 1). L'appréciation visuelle et au toucher de la cohésion indique une absence totale d'effritement dans le film de peinture obtenu. L'accessibilité à la porosité est excellente et l'adsorption du *n*-hexane est de 103 mg/g_{zéolithe anhydre}. Le séchage est avantageusement obtenu en 1 h à température ambiante.

### Formulation 13

L'élaboration de cette suspension comprend une masse sèche constituée de 83 % en poids de la zéolithe silicalite-1 de type structural MFI et de 17 % en poids à base d'une résine silicone disponible auprès de la société IMCD sous la dénomination SILRES® MP 50 E. Le solvant est de l'eau qui est utilisée à hauteur de 50 % en poids de la suspension finale non séchée.
Le film obtenu montre une très bonne adhésion (note de 0). L'appréciation visuelle et au toucher de la cohésion indique une absence tolale d'effritement dans le film de peinture. L'accessibilité à la porosité est excellente et l'adsorption du *n*-hexane est de 107 mg/g_{zéolithe anhydre}.. Les conditions de séchage nécessitent un traitement thermique à 250 °C pendant 30 min.

### Formulation 14

L'élaboration de cette suspension comprend une masse sèche constituée de 85 % en poids de la zéolithe silicalite-1 de type structural MFI et de 15 % en poids d'un mélange hybride constitué de 55 % en poids d'un liant organique à base d'une résine silicone disponible auprès de la société IMCD sous la dénomination SILRES® MP 50 E et de 45 % en poids d'un liant inorganique à base de silice colloïdale en phase aqueuse disponible aupès de la société Sigma-Aldrich sous la dénomination Ludox® HS-40. Le solvant est de l'eau, elle est utilisée à hauteur de 67 % en poids de la suspension finale non séchée. Le film obtenu montre une très bonne adhésion (note de 0). L'appréciation visuelle et au toucher de la cohésion indique une absence tolale d'effritement dans le film de peinture. L'accessibilité à la porosité est excellente et l'adsorption du *n*-hexane est de 106 mg/g_{zéolithe anhydre}. Les conditions de séchage nécessitent un traitement thermique à 250 °C pendant 30 min.

### Formulation 15

L'élaboration de cette suspension comprend une masse sèche constituée de 83 % en poids de la zéolithe silicalite-1 de type structural MFI et de 17 % en poids d'une composition constitué de 50 % en poids d'un liant organique à base de monomères organiques (monomères d'acétate de vinyle et d'éthylène) disponibles sous la dénomination VINNAPAS® EP 8010 et de 50 % en poids d'un liant inorganique à base de silice colloïdale dispersée en phase aqueuse disponible aupès de la société Sigma-Aldrich sous la dénomination Ludox® HS-40. Le solvant est de l'eau qui est utilisée à hauteur de 67 % en poids de la suspension finale non séchée.
Le film obtenu montre une très bonne adhésion (note de 1). L'appréciation visuelle et au toucher de la cohésion n'indique ancun effritement du film de peinture obtenu. En revanche, l'accessibiltié de la porosité est plus faible que pour les formulations précédentes (30 %). Par contre, le séchage est avantageusement obtenu en 1 h à température ambiante.

**[Tableau 1]**

| Exemples | Adhésion | Cohésion | Accessibilité de la porosité | Adsorption (1) | Séchage |
|---|---|---|---|---|---|
| Zéolithe 13X sous forme de poudre (pure) | n.a.⁽²⁾ | n.a. | 100% | 180 | n.a. |
| Formulation 1 | 0 | Aucun effritement | 70% | 131 | 250°C - 1/2h |
| Formulation 2 | 0 | Aucun effritement | 73% | 143 | 250°C - 1/2h |
| Formulation 3 | 0 | Aucun effritement | 94% | 150 | 250°C - 1/2h |
| Formulation 4 | 1 | Aucun effritement | 100% | 158 | ambiante - 1h |
| Formulation 5 | 0 | Léger effritement | 100% | 146 | ambiante - 1h |
| Formulation 6 | 2 | Effritement | 100% | 158 | ambiante - 1h |
| Formulation 7 | 0 | Aucun effritement | 100% | 126 | 250°C - 1/2h |
| Formulation 8 | 0 | Aucun effritement | 100% | 136 | 250°C - 1/2h |
| Zéolithe silicalite-1 sous forme de poudre | n.a. | n.a. | 100% | 110 | n.a. |
| Formulation 9 | 1 | Aucun effritement | 76% | 102 | 250°C - 1/2h |
| Formulation 10 | 1 | Aucun effritement | 87% | 98 | 250°C - 1/2h |
| Formulation 11 | 0 | Aucun effritement | 95% | 101 | 250°C - 1/2h |
| Formulation 12 | 1 | Aucun effritement | 85% | 103 | ambiante - 1h |
| Formulation 13 | 0 | Aucun effritement | 90% | 107 | 250°C - 1/2h |
| Formulation 14 | 0 | Aucun effritement | 93% | 106 | 250°C - 1/2h |
| Formulation 15 | 1 | Aucun effritement | 30% | n.d.⁽³⁾ | ambiante - 1h |

| | | | | | |
|---|---|---|---|---|---|
| ⁽¹⁾ Adsorption du *n*-hexane, unité : mg/g_{zéolithe anhydre} ⁽²⁾ *n.a .* : ces propriétés ne sont pas applicables avec de la poudre de zéolithe pure ⁽³⁾ *n.d.* : Les valeurs n'ont pas été déterminées | | | | | |

L'ensemble des résultats obtenus montre que la présence d'un liant organique dans la suspension améliore la capacité d'adhésion au support par comparaison avec une suspension de zéolithe dépourvue de liant, assurant ainsi une compatibilité avec des applications industrielles et spatiales.
Les liants inorganiques ont la particularité de ne pas dégazer sous vide de sorte qu'ils ne contaminent pas l'atmosphère d'un satellite en orbite. Une peinture zéolithique dont la composition comprend un liant inorganique permet de réduire la concentration de liant organique et ainsi de diminuer un éventuel dégazage de la partie organique de la peinture dans les conditions d'utilisation visées.
Par ailleurs, la présence d'un liant inorganique par exemple de type Ludox®, quand il est utilisé dans des proportions appropriées, améliore l'homogénéité de la suspension, c'est-à-dire qu'il permet une bonne répartition de la peinture à la surface du substrat, combiné à la majorité des liants organiques testés.

Selon une variante de réalisation de l'invention, un pigment noir est ajouté aux suspensions homogènes composant les peintures zéolithiques absorbantes en vue d'absorber de la lumière. Cette variante est notamment très utile pour protéger des équipements optiques embarqués à bord de satellite.

Le détail des formulations avec du charbon animal et les résultats sont présentés ci-dessous.

### Formulation 20

La composition de cette formulation de référence est obtenue après séchage du xylène (30 - 50% en poids) contenue dans la suspension homogène appliquée sous la forme d'un film de peinture zéolithique. La masse sèche est composée de 80% en poids de zéolithe déshydratée 13X de type structural FAU, de 20% en poids d'un liant organique en résine de silicone SILRES® HK 46.

### Formulation 21

Après séchage du xylène (30 - 50% en poids) de la suspension homogène appliquée sous la forme d'un film de peinture zéolithique, la masse sèche est composée de 75% en poids de zéolithe déshydratée 13X de type structural FAU, de 20% en poids d'un liant organique en résine de silicone SILRES® HK 46 et de 5 % de charbon animal déshydraté (comprenant 70 % d'hydroxyapatite).

### Formulation 22

Après séchage du xylène (30 - 50% en poids) de la suspension homogène appliquée sous la forme d'un film de peinture zéolithique, la masse sèche est composée de 70% en poids de zéolithe déshydratée 13X de type structural FAU, de 20% en poids d'un liant organique en résine de silicone SILRES® HK 46 et de 10% de charbon animal déshydraté (comprenant 70 % d'hydroxyapatite).

### Formulation 23

La composition de cette formulation de référence est obtenue après séchage du xylène contenue dans la suspension homogène appliquée sous la forme d'un film de peinture zéolithique. La masse sèche est composée de 70% en poids de zéolithe déshydratée 13X de type structural FAU, de 25% en poids d'un liant organique en résine de silicone DOWSIL® 2405 et de 5% d'un catalyseur de tétrabutanolate de titane.

### Formulation 24

Après séchage du xylène (30 - 50% en poids) de la suspension homogène appliquée sous la forme d'un film de peinture zéolithique, la masse sèche est composée de 65% en poids de zéolithe déshydratée 13X de type structural FAU, de 25% en poids d'un liant organique en résine de silicone DOWSIL® 2405, de 5% de charbon animal déshydraté (comprenant 70 % d'hydroxyapatite) et de 5% d'un catalyseur de tétrabutanolate de titane.

**Tableau 2**

| **Exemple** | **Epaisseur (µm)** | **Adhésion (ISO 2409)** | **Séchage** | **Réflexio n de la lumière ¹** | **Accessibilit é à la porosité** | **Capacité d'adsorption du *n*-hexane** (mg/g _{zéolithe anhydre}) |
|---|---|---|---|---|---|---|
| 20 | 46 ± 2 | 0 | 250 °C - 30 min | 68 | 95 | 175 ± 2 |
| 21 | 40 ± 8 | 1 | | 41 | 76 | 130 ± 1 |
| 22 | 52 ± 10 | 1 | | 32 | 79 | 125 ± 3 |
| 23 | 46 ± 7 | 1 | T° ambiant e - 1 h | 65 | 100 | 160 ± 2 |
| 24 | 116 ± 8 | 0 | | 29 | 77 | 118 ± 3 |

| | | | | | | |
|---|---|---|---|---|---|---|
| ¹ La réflexion de la lumière a été mesurée entre 400 et 2500 nm par le spectrophotomètre UV Visible proche IR Cary 5000 fourni par Variant. | | | | | | |

Concernant les propriétés d'adhésion, celles-ci sont équivalentes à celles obtenues pour les peintures équivalentes élaborées sans l'ajout de pigment noir avec des notes d'adhésion variant de 0 à 1 pour l'ensemble des peintures élaborées. En d'autres termes, les propriétés d'adhésion sont très bonnes. En plus de ces dernières, les propriétés d'absorption de la lumière sont bien meilleures avec l'utilisation du charbon animal. L'accessibilité à la porosité de ces peintures reste majoritairement accessible et les capacités d'adsorption vis-à-vis du *n*-hexane sont intéressantes.

Le détail des formulations avec un pigment noir constitué de noir de carbone (100% de carbone) et les résultats sont présentés ci-dessous.

### Formulation 25

Elle est identique à la formulation 20

### Formulation 26

Après séchage du xylène (30 - 50% en poids) de la suspension homogène appliquée sous la forme d'un film de peinture zéolithique, la masse sèche est composée 79% en poids de zéolithe déshydratée 13X de type structural FAU, de 20% en poids d'un liant organique en résine de silicone SILRES® HK 46 et de 1 % de noir de carbone.

### Formulation 27

Après séchage du xylène de la suspension homogène appliquée sous la forme d'un film de peinture zéolithique, la masse sèche est composée 78% en poids de zéolithe déshydratée 13X de type structural FAU, de 20% en poids d'un liant organique en résine de silicone SILRES® HK 46 et de 2% de noir de carbone.

### Formulation 28

Après séchage du xylène (30 - 50% en poids) de la suspension homogène appliquée sous la forme d'un film de peinture zéolithique, la masse sèche est composée 75% en poids de zéolithe déshydratée 13X de type structural FAU, de 20% en poids d'un liant organique en résine de silicone SILRES® HK 46 et de 5% de noir de carbone.

### Formulation 29

Elle est identique à la formulation 23

### Formulation 30

Après séchage du xylène (30 - 50% en poids) de la suspension homogène appliquée sous la forme d'un film de peinture zéolithique, la masse sèche est composée de 69% en poids de zéolithe déshydratée 13X de type structural FAU, de 25% en poids d'un liant organique en résine de silicone DOWSIL® 2405, de 1% de noir de carbone et de 5% d'un catalyseur de tétrabutanolate de titane.

### Formulation 31

Après séchage du xylène (30 - 50% en poids) de la suspension homogène appliquée sous la forme d'un film de peinture zéolithique, la masse sèche est composée de 68% en poids de zéolithe déshydratée 13X de type structural FAU, de 25% en poids d'un liant organique en résine de silicone DOWSIL® 2405, de 2% de noir de carbone et de 5% d'un catalyseur de tétrabutanolate de titane.

### Formulation 32

Après séchage du xylène (30 - 50% en poids) de la suspension homogène appliquée sous la forme d'un film de peinture zéolithique, la masse sèche est composée de 65% en poids de zéolithe déshydratée 13X de type structural FAU, de 25% en poids d'un liant organique en résine de silicone DOWSIL® 2405, de 5% de noir de carbone et de 5% d'un catalyseur de tétrabutanolate de titane.

**Tableau 3**

| **Formulation** | **Epaisseur (µm)** | **Note d'adhésion (ISO 2409)** | **Température et temps de séchage** | **Réflexion de la lumière entre 400 et 2500 nm (%)** |
|---|---|---|---|---|
| 25 | 46 ± 2 | 0 | 250 °C - 30 min | 68 |
| 26 | 21 + 2 | 0 | | 15 |
| 27 | 18 ± 3 | 0 | | 12 |
| 28 | 10 ± 2 | 0 | | 7 |
| 29 | 46 ± 7 | 1 | T° ambiante - 1h | 65 |
| 30 | 18 ± 4 | 0 | | 15 |
| 31 | 28 ± 2 | 0 | | 12 |
| 32 | 17 ± 2 | 0 | | 8 |

Les propriétés d'adhésion des peintures élaborées avec le noir de carbone sont également très bonnes (note d'adhésion de 0 pour l'ensemble des peintures élaborées) et les propriétés d'absorption de la lumière ont pu être drastiquement réduites malgré la faible teneur massique en noir de carbone (Tableau 3). Ces dernières sont meilleures que les propriétés obtenues pour les peintures élaborées avec le charbon animal comme pigment noir.
L'accessibilité à la porosité est similaire à celle obtenue avec le charbon animal de même que la capacité d'adsorption du n-hexane.

Ainsi, la présente invention permet l'élaboration de peintures zéolithiques présentant un grand pouvoir adsorbant moléculaire. Ces peintures décontaminantes sont applicables dans le domaine spatial pour adsorber différentes molécules (eau, alcanes, aromatiques, phtalates, etc.), pour les salles blanches de l'industrie et de la microélectronique, dans les cavités instrumentales, etc. Les peintures notamment aqueuses sont également utiles pour le grand public (établissements recevant du public ERP), notamment dans le domaine du bâtiment sous forme de peinture murale pour l'adsorption d'humidité, de formaldéhyde ou encore les composants des colles utilisées dans le mobilier. C'est notamment le séchage à température ambiante qui est important pour une application grand public. De plus, les formulations de ces peintures zéolithiques ont été optimisées afin d'obtenir d'excellentes capacités d'adsorption et d'adhésion ainsi que de bonnes résistances mécaniques et thermiques : il n'est pas nécessaire d'utiliser une couche de primaire d'accrochage permettant d'améliorer l'adhésion entre la peinture et le support même lorsque le support est de nature métallique. En outre la présence d'un pigment noir est également très efficace pour l'absorption de la lumière sans pour autant réduire les propriétés d'adhésion du film de peinture zéolithique sur les surfaces ni celles d'absorption du n-hexane. Les suspensions homogènes et les peintures zéolithiques associées (ainsi que les films de peintures déposés) combinent à la fois des propriétés d'adsorption de polluants organiques (rôle de la zéolithe) ainsi que des propriétés d'absorption de la lumière (rôle du pigment noir) tout en conservant des propriétés d'adhésion suffisantes sur des surfaces (rôle du liant).

## Revendications

1. Suspension homogène destinée à la fabrication de peintures zéolithiques comprenant :
• de 50 à 70 % en poids d'une masse sèche par rapport au poids de la suspension homogène, la masse sèche étant constituée :
- de 15 à 35 % en poids d'une composition par rapport au poids total de la masse sèche, la composition comprenant :
- de 30 à 100 % en poids d'un liant organique par rapport au poids de la composition et
- de 0 à 70 % en poids d'un liant inorganique par rapport au poids de la composition, et
- de 65 à 85 % en poids d'une zéolithe par rapport au poids total de la masse sèche,
• de 30 à 50 % en poids d'un solvant par rapport au poids de la suspension homogène.

2. Suspension homogène selon la revendication 1, dans laquelle la masse sèche comprend en outre de 3 à 8 % en poids d'un catalyseur par rapport au poids total de la masse sèche, le catalyseur étant choisi parmi des catalyseurs de titane, tel que le tétrabutanolate de titane de formule brute C₁₆H₃₆O₄Ti, le tétrachlorure de titane TiCl₄ ou le dioxyde de titane TiO₂.

3. Suspension homogène selon l'une des revendications 1 à 2, dans lequel le liant organique est choisi parmi des résines silicone, telles que des polydiméthylsiloxanes, des monomères organiques dispersés en phase aqueuse, tels que des monomères d'acétate de vinyle et d'éthylène dispersés en phase aqueuse, ou une combinaison de ces liants organiques.

4. Suspension homogène selon l'une des revendications 1 à 3, dans laquelle la composition comprend 100 % en poids d'un liant organique par rapport au poids de la composition.

5. Suspension homogène selon l'une des revendications 1 à 3, dans laquelle la composition comprend de 30 à 70 % en poids de liant inorganique par rapport au poids de la composition, le liant inorganique étant une suspension de silice colloïdale.

6. Suspension homogène selon l'une des revendications 1 à 5, dans laquelle le solvant est choisi parmi le Xylène ou l'Eau.

7. Suspension homogène selon l'une des revendications 1 à 6, dans laquelle la zéolithe est choisie parmi la zéolithe 13X de type structural FAU, la zéolithe de type strutural LTA, la zéolithe silicalite-1 de type strutural MFI, la zéolithe de type strutural *BEA ou une combinaison de ces zéolithes.

8. Suspension homogène selon l'une des revendications 1 à 7, dans laquelle la masse sèche comprend de 70 à 80 % en poids de zéolithe par rapport au poids total de la masse sèche.

9. Suspension homogène selon l'une des revendications 1 à 8, dans lequel la composition comprend en outre entre 1 et 20% d'un pigment noir.

10. Suspension homogène selon la revendication 9, dans lequel le pigment noir est choisi parmi du charbon animal, du noir du carbone ou un mélange de ces deux composés.

11. Suspension homogène selon l'une des revendications 1 à 10, dans lequel la suspension homogène est dépourvue d'ester dibasique tel que le DBE.

12. Suspension homogène selon l'une des revendications 1 à 11, dans lequel la suspension homogène est dépourvue de tout dérivé de cellulose.

13. Suspension homogène selon l'une des revendications 3 à 11, dans lequel les résines silicones sont choisies parmi les polydiméthylsiloxanes, les résines SILRES® MP 50 E, SILRES® MSE 100, SILRES® HK 46, Silikophen® AC 900, Silikophen® AC 1000, DOWSIL® RSN-0805, DOWSIL® RSN-0806, DOWSIL® 2405 et une combinaison de ces résines.

14. Peinture zéolithique destinée à former un film de peinture sur une surface, la peinture zéolithique étant constituée de la suspension homogène selon l'une des revendications précédentes.
